# EUROPEAN PATENT SPECIFICATION

(11) **EP 3 013 111 B1**
(45) Date of publication and mention of the grant of the patent: **26.12.2018**
(21) Application number: 14813874.6
(22) Date of filing: 08.05.2014
(51) Int. Cl.: G06F 3/01, G06F 3/0346, H04W 8/00, H04W 4/00, G06F 1/16, H04W 12/06, H04W 4/21, H04W 4/80

(54) **WEARABLE DEVICE AND COMMUNICATION METHOD USING WEARABLE DEVICE**
TRAGBARE VORRICHTUNG UND KOMMUNIKATIONSVERFAHREN MIT TRAGBARER VORRICHTUNG
DISPOSITIF VESTIMENTAIRE ET PROCÉDÉ DE COMMUNICATION UTILISANT LE DISPOSITIF VESTIMENTAIRE

(30) Priority: 17.06.2013 KR 20130068918
(43) Date of publication of application: 27.04.2016
(73) Proprietor: Samsung Electronics Co., Ltd., Suwon-si, Gyeonggi-do 443-742 (KR)
(72) Inventor: YOON, Seung Keun, Suwon-si Gyeonggi-do 443-803 (KR); KIM, Sang Joon, Suwon-si Gyeonggi-do 443-803 (KR); CHOI, Chang Mok, Suwon-si Gyeonggi-do 443-803 (KR)
(74) Representative: Grünecker Patent- und Rechtsanwälte PartG mbB
(86) International application number: PCT/KR2014/004088
(87) International publication number: WO 2014/204092

(56) References cited:
- EP-B1- 0 823 082
- WO-A1-2011/103684
- KR-A- 20070 099 887
- KR-A- 20090 061 179
- US-A1- 2007 188 323
- US-A1- 2009 096 746
- US-A1- 2009 241 171
- US-A1- 2009 265 470
- US-A1- 2009 326 406
- US-A1- 2011 092 155
- US-A1- 2011 247 056
- US-A1- 2011 312 311
- US-A1- 2012 290 682
- US-A1- 2013 090 065

## Description

### TECHNICAL FIELD

The following description relates to a wearable device and a communication method using the wearable device.

### RELATED ART

Currently, interest on a wearable device is increasing. The wearable device refers to a device that is fabricated to be wearable around a body or clothes through miniaturization and weight lightening so that a user may use the device at the user's pleasure in a mobile environment. Accordingly, the wearable device may be present with the user at all times even though the user is participating into a predetermined activity, and may be used by the user at all times. Every time the wearable device is used, the wearable device may provide information to the user by implementing an instruction. Various types of wearable devices, such as a wearable device for clothes and a wearable device for accessories, for example, may be used. Further, the wearable device is used in a variety of fields, such as a fashion and a medical field, for example, and an application field of the wearable device is predicted to be further expanded.

EP0823082 B1 discloses a wearable universal user interface device provided for interacting with a variety of electronic apparatus. US2009241171 A1 discloses a wearable system and a method for transferring and controlling information/service based on biologically generated information from a user are provided. US2011312311 A1 discloses methods and apparatuses are provided that may be implemented in and/or with a mobile device to allow gesture based remote control of one or more controllable devices. US2011092155 A1 discloses a compass output in a first portable electronic device is monitored as the first device and a second electronic device come closer to each other. WO2011103684 A1 discloses a near-field communication (NFC) system that may include a plurality of spaced-apart NFC sensors and at least one mobile wireless communications device. US2007188323 A1 discloses motion detection notification such as a motion detector in a portable device detecting a motion of the device and issues an activation signal when the detected motion has a magnitude greater than a preset threshold, wherein a detection notification component in the portable device then receives the activation signal and initiates communication with an additional device that detects a corresponding motion to the motion of the portable device and is configured for communication with the portable device. US2009265470 A1 discloses a technology by which a gesture made with a source device (e.g., a cellular telephone), such as a throwing or pointing motion, is used to automatically set up a connection with another device to which the gesture is directed. US2012290682 A1 discloses an information processing device including a movement detection unit configured to detect a specific operation, and a process execution unit configured to, when the movement detection unit detects the specific operation, execute a process in accordance with the specific operation. US2011247056 A1 discloses a method and an apparatus for searching neighboring Bluetooth TM devices through an external terminal having programming capability.

### DETAILED DESCRIPTION

### SOLUTIONS

The invention is defined according to the independent claims. The dependent claims recite advantageous embodiments of the invention.

Other features and aspects will be apparent from the following detailed description, the drawings, and the claims.

### BRIEF DESCRIPTION OF THE DRAWINGS

FIG. 1 is a flowchart illustrating an example of a communication method using a wearable device.
FIG. 2 is a flowchart illustrating an example of an operation of recognizing an external device of FIG. 1.
FIG. 3 is a diagram describing an example of a communication method using a wearable device.
FIG. 4 is a diagram describing another example of a communication method using a wearable device.
FIG. 5 is a diagram describing still another example of a communication method using a wearable device.
FIG. 6 is a block diagram illustrating an example of a wearable device.

### MODE

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, description of well-known functions and constructions may be omitted for increased clarity and conciseness.

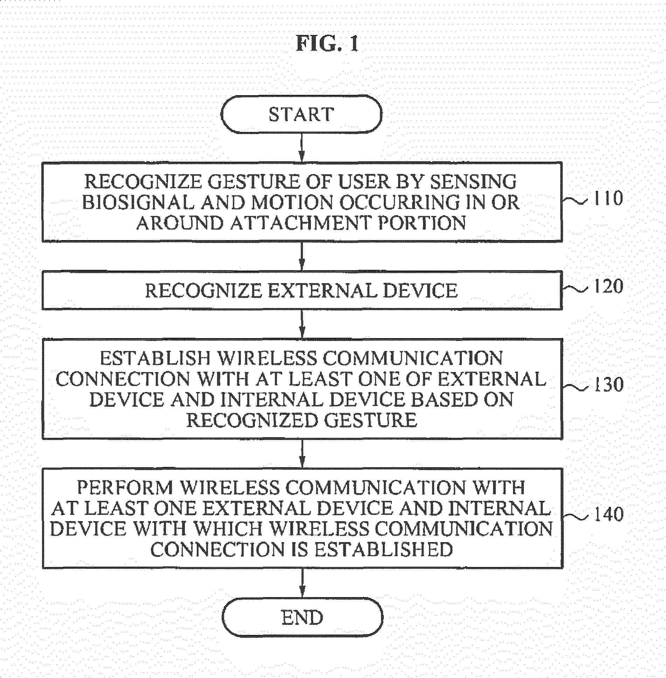

FIG. 1 illustrates an example of a communication method using a wearable device.

Referring to FIG. 1, in operation 110, a gesture of a user is recognized by sensing a motion and a biosignal that occur in or around a portion to which the wearable device is attached. The wearable device is attached to a portion of a body of the user. For example, a wrist-type wearable device is attached to a wrist of the user, and a glass-type wearable device is attached to a head of the user. The user may move a region corresponding to or around the portion to which the wearable device is attached. A biosignal may occur in or around the portion to which the wearable device is attached. In operation 110, the motion and the biosignal occurring in or around the portion where the wearable device is attached may be sensed.

The wearable device may include a motion sensing device or a biosignal sensing device. The motion sensing device may sense a motion occurring in or around an attachment portion, and may include at least one of an acceleration sensor, a gyro sensor, and a camera. The biosignal sensing device may sense a biosignal occurring in or around the attachment portion, and may include at least one of an electromyogram (EMG) sensor, an electrocardiogram (ECG) sensor, an electroencephalogram (EEG) sensor, and a temperature sensor. Accordingly, in operation 110, the motion occurring in or around the attachment portion may be sensed using the motion sensing device, and the biosignal occurring in or around the attachment portion may be sensed using the biosignal sensing device. A gesture input from the user may be recognized based on the sensed motion and biosignal.

For example, in a case in which the wearable device is provided as a wrist-type wearable device, a motion of a wrist or an arm may be sensed using at least one of an acceleration sensor and a gyro sensor, and an EMG signal according to a muscular contraction or relaxation of the wrist may be sensed using an EMG sensor in operation 110. Further, when the user turns the wrist clockwise, an acceleration speed at which the wrist moves may be sensed using the acceleration sensor, an angular velocity at which the wrist turns using the gyro sensor, and an EMG signal of contracted and relaxed muscles among the muscles of the wrist may be sensed using the EMG sensor. A gesture of the user turning the wrist clockwise may be recognized based on the sensed acceleration speed, angular velocity, and EMG signal.

As another example, in a case in which the wearable device is provided as a glass-type wearable device, the user may move the head up and down. In this example, in operation 110, a motion of the head may be sensed using a camera included in the glass-type wearable device and brainwaves of the user may be sensed using the EEG sensor included in the glass-type wearable device. Accordingly, a gesture of the user may be recognized based on the sensed motion of the head and brainwaves of the user.

As another example, in a case in which the wearable device is provided as a clothes-type wearable device, a motion of the user may be sensed using at least one of an acceleration sensor and a gyro sensor, and an ECG signal according to the motion of the user may be sensed using an ECG sensor or the temperature of a portion moved by the user may be sensed using a temperature sensor in operation 110. Accordingly, a gesture of the user may be recognized based on a biosignal, such as the ECG signal and the body temperature, and the sensed motion of the user.

Further, in operation 110, whether a gesture is input from a rightful user may be verified based on a biosignal. When the user is authenticated, the gesture may be recognized by sensing the motion and the biosignal. Conversely, when the user is not authenticated, the input gesture may not be recognized. Based on a peculiarity that each user has a different biosignal, the communication method using the wearable device may be performed only in a case in which the rightful user wears the wearable device.

For example, in a case in which the wearable device is provided as the wrist-type wearable device, a thickness of a wrist of a user wearing the wearable device may be sensed using an EMG sensor included in the wearable device in operation 110. In this example, information associated with the wrist thickness of the rightful user may be stored in the wearable device in advance, and the stored wrist thickness and the sensed wrist thickness may be compared. When the stored wrist thickness and the sensed wrist thickness match, the user wearing the wearable device may be determined to be the rightful user and a gesture of the user may be recognized by sensing a motion and a biosignal. Conversely, when the stored wrist thickness and the sensed wrist thickness do not match, the user may be determined not to be the rightful user and the gesture of the user may not be recognized.

In operation 120, an external device to perform wireless communication with the wearable device is recognized. The external device may refer to a device that cannot be arbitrarily controlled by the user of the wearable device. For example, the external device may include a smart device of another user, a wearable device of the other user, a wireless fidelity (WiFi) router, and a payment device. The external device may include a near field communication (NFC) device, for example, a smart device to which NFC is applied, capable of performing NFC with the wearable device.

In operation 120, the wearable device may be set to perform the wireless communication with the external device, and may also be set to perform the wireless communication with the external device based on the recognized gesture. Also, at least one external device to perform the wireless communication may be searched and the external device to perform the wireless communication with the wearable device may be selected from among the found at least one external device. The external device to perform the wireless communication with the wearable device may be selected from among the found at least one external device based on the recognized gesture.

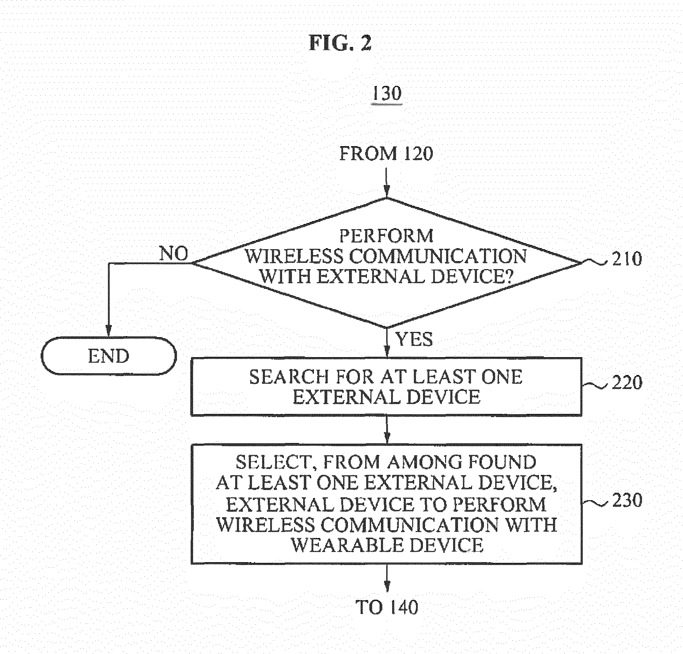

Although operations 110 and 120 are illustrated to be sequentially performed in FIG. 1, operations 110 and 120 may also be simultaneously performed. Operation 120 will be further described with reference to FIG. 2.

In operation 130, wireless communication connection with at least one of the external device and the internal device is established based on the recognized gesture. The internal device may refer to a device that can be arbitrarily controlled by the user of the wearable device. For example, the internal device may include a smart device and a storage of the user of the wearable device.

In operation 130, the wearable device may identify a predetermined gesture that is mapped to the recognized gesture, and may establish the wireless communication connection with at least one of the external device and the internal device based on the predetermined gesture. The predetermined gesture may correspond to at least one function set to be executed in response to the recognized gesture.

For example, a gesture of the user moving the wrist from side to side may be set to correspond to a communication start function and a communication device setting function, and a gesture of the user moving the wrist up and down may be set to correspond to a communication connection setting function. In this example, when the gesture of the user moving the wrist from side to side is recognized based on the sensed motion and biosignal, the wearable device may identify the communication start function and the communication device setting function by mapping the recognized gesture and the predetermined gesture in operation 130. When the gesture of the user moving the wrist up and down is recognized based on the sensed motion and biosignal, the wearable device may establish the wireless communication connection with at least one of the external device and the internal device.

According to an example, the wearable device may identify, from among a plurality of communication schemes, a communication scheme used to perform wireless communication with at least one of the external device and the internal device, and may establish a wireless communication connection with at least one of the external device and the internal device using the identified communication scheme in operation 130. The plurality of communication schemes may include an NFC scheme, a wireless fidelity (WiFi) communication scheme, an infrared (IR) communication scheme, and a Bluetooth communication scheme. The plurality of communication schemes may include a plurality of communication protocols.

According to another example, the wearable device may identify data used to perform wireless communication with at least one of the external device and the internal device based on the recognized gesture, and may establish a wireless communication connection with at least one of the external device and the internal device based on the identified data in operation 130. The data may indicate all of the data that may be transmitted and received between the wearable device and at least one of the external device and the internal device. For example, when the user makes a payment using the wearable device, the wearable device may identify data to be exchanged with the external device as payment data by recognizing the gesture of the user, and may establish the wireless communication connection with the external device based on the identified data.

According to still another embodiment, the wearable device may obtain information used for the wireless communication connection from the external device and the internal device based on the recognized gesture, and may establish the wireless communication connection with the external device and the internal device based on the obtained information so as to enable the wireless communication between the external device and the internal device in operation 130. For example, the user may carry the wearable device and the internal device together with the user, and may desire a direct communication between the internal device and the external device. In this example, the wearable device may obtain information associated with the external device, information associated with the internal device, and information used to connect the internal device and the external device based on the recognized gesture, and may establish the wireless communication connection with the external device and the internal device based on the obtained information.

In operation 140, wireless communication is performed with at least one of the external device and the internal device with which the wireless communication connection is established. When the wireless communication connection between the wearable device and the internal device is established, the wireless communication between the wearable device and the internal device may be performed based on settings. Accordingly, the user may use data stored in the internal device and may further conveniently use the wearable device using a function of the internal device.

The wireless communication between the wearable device and the internal device may be simultaneously performed through operations 110 through 130. Accordingly, even though the wearable device includes a low capacity memory or has low computing power, an embedded memory or a processor of the internal memory may be used.

According to an embodiment, the wearable device may perform wireless communication with the external device and the internal device based on settings of the wireless communication connection, and may set data received from the external device to be stored in the internal device in operation 140. Also, the wearable device may load data from the internal device, and may perform the wireless communication with the external device based on the loaded data. Here, the loaded data may include information associated with at least one of the user of the wearable device, settings of the wireless communication connection, the wearable device, and the internal device.

According to an example, the communication method using the wearable device enables a user to perform wireless communication with a user of at least one of an external device and an internal device through feedback. For example, the communication method using the wearable device may feed back, to the user in a visual, auditory, or tactual manner, information associated with at least one of a function corresponding to an input gesture, the wearable device, the external device, and the internal device. Accordingly, the user may input a gesture based on the fed back information. A visual feedback may refer to a feedback that is provided using a display included in the wearable device or may refer to a feedback that is provided using a display of the internal device and the external device communicating with the wearable device. An auditory feedback may refer to a feedback that is provided in a form of sound through a speaker unit of the wearable device or a speaker unit of the internal device or the external device. A tactual feedback may refer to a feedback that is provided in a tactual form through a vibrating unit of the wearable device or a vibrating unit of the internal device or the external device.

FIG. 2 illustrates an example of operation 120 of FIG. 1.

Referring to FIG. 2, operations 110 and 120 of FIG. 1 may be sequentially performed and may also be simultaneously performed. Accordingly, a case in which operations 110 and 120 are sequentially performed and a case in which operations 110 and 120 are simultaneously performed will be separately described.

In the case in which operations 110 and 120 are sequentially performed, whether to perform wireless communication with the external device is determined in operation 210. For example, the wearable device may be set to perform the wireless communication with the external device based on the recognized gesture. In this example, the wearable device may be set to identify a predetermined gesture that is mapped to the recognized gesture, and perform the wireless communication with the external device according to a function corresponding to the predetermined gesture.

When the wearable device is not set to perform the wireless communication with the external device, the wireless communication with the external device may not be performed until a subsequent gesture is recognized.

When the wearable device is set to perform the wireless communication with the external device, at least one external device is searched for in operation 220. In this example, the wearable device may search for at least one external device based on a distance between the wearable device and the at least one external device, and may also search for the at least one external device using a list of external devices.

In operation 230, the external device to perform the wireless communication with the wireless device is selected from among the found at least one external device. For example, the wearable device may select, from among the found at least one external device, the external device to perform the wireless communication based on the recognized gesture. When two external devices including a first external device and a second external device are found, the wearable device may be set to select the first external device in response to a gesture A input from the user, and to select the second external device in response to a gesture B input from the user. In this example, when the wearable device recognizes the gesture B, the wearable device may select the second external device as the external device to perform the wireless communication.

In the case in which operations 110 and 120 are simultaneously performed, whether to perform the wireless communication with the external device is determined in operation 210. In this example, the wearable device may determine whether to perform the wireless communication with the external device based on predetermined settings, and may receive, from the user, settings on whether to perform the wireless communication with the external device.

When the wearable device is set to perform the wireless communication with the external device, at least one external device is searched for in operation 210. In this example, similar to the case in which operations 110 and 120 are sequentially performed, the wearable device may search for at least one external device based on a distance between the wearable device and the at least one external device and may also search for the at least one external device using a list of external devices.

In operation 230, the external device to perform the wireless communication with the wireless device is selected from among the found at least one external device. In this example, the wearable device may select, from among the found at least one external device, the external device to perform the wireless communication with the wearable device based on the distance. Further, the wearable device may select the external device to perform the wireless communication based on predetermined settings, and may also receive, from the user, settings on a selection of the external device to perform the wireless communication.

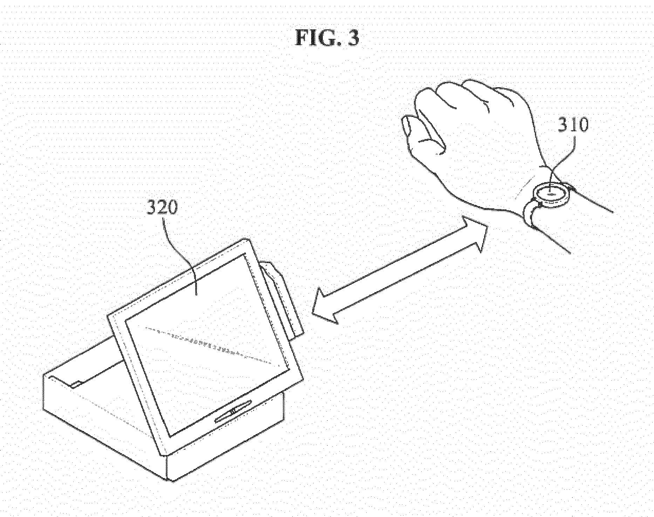

FIG. 3 illustrates a diagram describing an example of a communication method using a wearable device 310.

Referring to FIG. 3, the wearable device 310 may process a payment using a card through wireless communication with an external device 320. The external device 320 may be a payment device.

In a case in which a gesture A is set as a gesture to process a payment using a card with the external device 320, the wearable device 310 may perform a payment function in response to recognition of the gesture A. When the wearable device 310 moves to be near to the external device 320, the wearable device 310 may recognize the external device 320. The wearable device 310 may also recognize the external device 320 through gesture recognition.

During a card payment processor, the wearable device 310 may identify card data used to perform the wireless communication with the external device 320 from among a plurality of sets of card data using the gesture recognition. In this example, the plurality of sets of card data may be stored in the wearable device 310 and may also be stored in an internal device (not shown) of, for example, a smart phone, which performs the wireless communication with the wearable device 310. When the plurality of sets of card data is stored in the internal device, the wearable device 310 may receive the plurality of sets of card data from the internal device through the wireless communication with the internal device. The wearable device 310 may identify, from among a plurality of communication schemes, a communication scheme used to perform the wireless communication with the external device 320 using the gesture recognition.

For example, when three sets of card data are stored in the wearable device 310, the wearable device 310 and the external device 320 may use three communication schemes. A gesture A may be set to identify a first set of card data and a first communication scheme, a gesture B may be set to identify a second set of card data and a second communication scheme, and a gesture C may be set to identify a third set of card data and a third communication scheme. In this example, in response to recognition of the gesture C, the wearable device 310 may communicate with the external device 320 using the third communication scheme and may transmit the third set of card data to the external device 320. Through the above procedure, the card payment process may be performed.

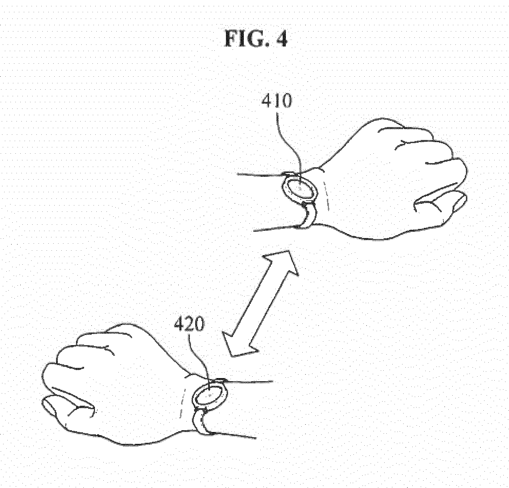

FIG. 4 illustrates a diagram describing another example of a communication method using a wearable device 410.

Referring to FIG. 4, the wearable device 410 may perform wireless communication with a wearable device 420 of another user.

When the wearable device 410 and the wearable device 420 are positioned in a near field, the wearable device 410 and the wearable device 420 may recognize each other. When the wearable device 410 recognizes a gesture set to perform wireless communication with the wearable device 420, the wearable device 410 may transmit a wireless communication setting request to the wearable device 420. When the wearable device 410 receives the wireless communication setting request and then, recognizes a gesture set by the user of the wearable device 420 to perform the wireless communication with the wearable device 410, a wireless communication connection may be established between the wearable device 410 and the wearable device 420 and data may be exchanged therebetween.

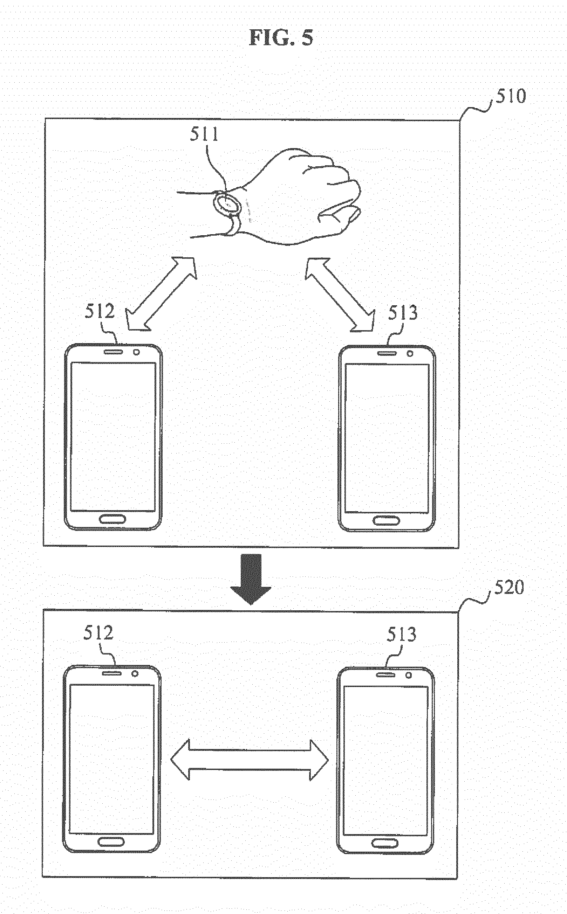

FIG. 5 illustrates a diagram describing still another example of a communication method using a wearable device 511.

Referring to FIG. 5, the wearable device 511 may establish a wireless communication connection so as to enable wireless communication between an internal device 512 and an external device 513.

Specifically, referring to a block 510, the wearable device 511 may obtain information used for a wireless communication connection from the internal device 512 and the external device 513. For example, when the wearable device 511 recognizes a gesture set to connect the internal device 512 and the external device 513 around the external device 511, the wearable device 511 may obtain information used for the wireless communication connection from the internal device 512 and the external device 513 in order to connect the internal device 512 and the external device 513. Information used for the wireless communication connection may include information associated with the internal device 512 and the external device 513 and information associated with a communication right.

When information used for the wireless communication connection is obtained from the internal device 512 and the external device 513, the wearable device 511 may control a connection between the internal device 512 and the external device 513 based on the obtained information so as to enable the wireless communication between the internal device 512 and the external device. Accordingly, as illustrated in a block 520, the internal device 512 and the external device 513 may directly communicate with each other without using the wearable device 511.

According to an example, in a case in which an external device is a WiFi router, when the wearable device is positioned within coverage of the WiFi router, the wearable device may recognize the WiFi router. In this example, when a plurality of WiFi routers is present, the wearable device may select a WiFi router from among the plurality of WiFi routers based on a recognized gesture, may also select a WiFi router from among the plurality of WiFi routers based on predetermined information, and may also select a WiFi router to perform the wireless communication based on a strength of a signal. When the WiFi router is recognized, the wearable device may recognize a gesture and may set the recognized WiFi router to perform the wireless communication with an internal device. To this end, the wearable device may obtain a function used for the wireless communication connection from the internal device and the WiFi router, and may establish the wireless communication connection with the internal device and the WiFi router based on the obtained information. Accordingly, the internal device may be directly connected to the WiFi router.

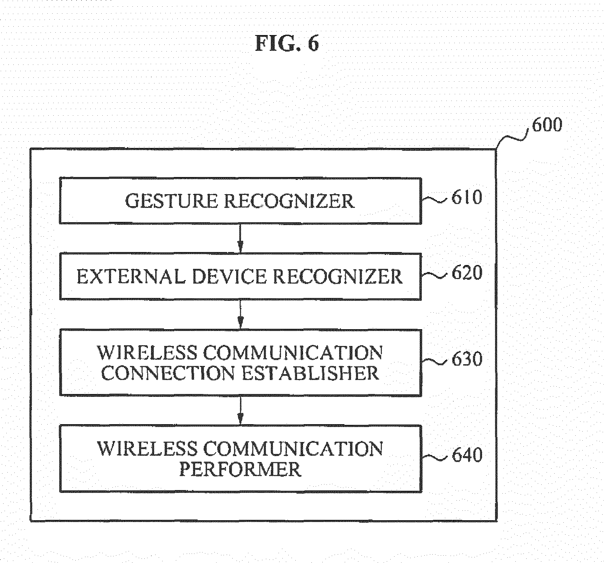

FIG. 6 illustrates an example of a wearable device 600. Referring to FIG. 6, the wearable device 600 includes a gesture recognizer 610, a wireless communication connection establisher 630, and a wireless communication performer 640.

The gesture recognizer 610 is configured to recognize a gesture of a user by sensing a motion and a biosignal that occur in or around a portion to which the wearable device 600 is attached.

The wireless communication connection establisher 630 is configured to establish a wireless communication connection with at least one of an external device and an internal device based on the recognized gesture.

The wireless communication performer 640 is configured to perform wireless communication with at least one of the external device and the internal device with which the wireless communication connection is established.

The wearable device 600 further includes an external device recognizer 620 configured to recognize an external device to perform wireless device with the wearable device 600.

Description made above with reference to FIG. 1 through FIG. 5 may be applied to the wearable device 600 of FIG. 6 and thus, a further detailed description will be omitted.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of non-transitory computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files including higher level code that may be executed by the computer using an interpreter. The program instructions, that is, software, may be distributed over network coupled computer systems so that the software is stored and executed in a distributed fashion. For example, the software and data may be stored by one or more computer readable storage mediums. Also, functional programs, codes, and code segments that accomplish the examples disclosed herein can be easily construed by programmers skilled in the art to which the examples pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

A number of examples have been described above. Nevertheless, it should be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A communication method using a wearable device (600), comprising:
recognizing (110) a gesture of a user by sensing a motion and a biosignal that occur in or around a portion of a body of the user to which the wearable device (600) is attached;
recognizing (120) by the wearable device (600) an external device;
establishing (130) a wireless communication connection for the wearable device (600) with the recognized external device and an internal device based on the recognized gesture;
obtaining information from the external device and the internal device used for a direct wireless communication connection between the external device and the internal device without the wearable device (600) based on the recognized gesture;
and establishing the direct wireless communication connection between the external device and the internal device based on the obtained information;
wherein the internal device refers to a device that is arbitrarily controllable by the user of the wearable device (600);
wherein the external device refers to a device that is not arbitrarily controllable by the user of the wearable device (600).

2. The communication method of claim 1, wherein the establishing of the direct wireless communication connection between the external device and the internal device based on the obtained information comprises setting, by the wearable device (600), data received from the external device to be stored in the internal device.

3. The communication method of claim 1, wherein the establishing of the direct wireless communication connection between the external device and the internal device based on the obtained information comprises loading data, by the wearable device (600) from the internal device; and performing the wireless communication with the external device based on the loaded data, wherein the loaded data comprises information associated with at least one of a user of the wearable device (600), establishment of the wireless communication connection, the wearable device (600), and the internal device.

4. A wearable device (600), comprising:
a gesture recognizer (610) configured to recognize a gesture of a user by sensing a motion and a biosignal that occur in or around a portion of a body of the user to which the wearable device (600) is attached;
an external device recognizer (620) configured to recognize the external device to perform the wireless communication with the wearable device (600);
a wireless communication connection establisher (630) configured to establish a wireless communication connection for the wearable device (600) with an external device and an internal device based on the recognized gesture;
a wireless communication performer (640) configured to perform wireless communication by the wearable device (600) with the external device and the internal device based on the recognized gesture;
wherein the internal device refers to a device that is arbitrarily controllable by the user of the wearable device (600);
wherein the external device refers to a device that is not arbitrarily controllable by the user of the wearable device (600);
wherein the wireless communication performer is further configured to obtain
information used for a direct wireless communication connection between the external device and the internal device without the wearable device (600) based on the recognized gesture; and to establish the direct wireless communication connection between the external device and the internal device based on the obtained information.

5. A non-transitory computer-readable storage medium storing a program for communication method using a wearable device (600), the program comprising instructing for causing a computer to perform the method of:
recognizing a gesture of a user by sensing a motion and a biosignal that occur in or around a portion of a body of the user to which the first wearable device (600) is attached;
searching for an external device to identify a found external device; and
establishing a wireless communication connection for the wearable device (600) with the external device and an internal device based on the recognize gesture;
obtaining information from the external device and the internal device used for a direct wireless communication connection between the external device and the internal device without the wearable device (600) based on the recognized gesture;
and establishing the direct wireless communication connection between the external device and the internal device based on the obtained information;
wherein the internal device refers to a device that is arbitrarily controllable by the user of the wearable device (600);
wherein the external device refers to a device that is not arbitrarily controllable by the user of the wearable device (600).

## Patentansprüche

1. Kommunikationsverfahren unter Verwendung einer tragbaren Vorrichtung (600), umfassend:
Erkennen (110) einer Geste eines Nutzers durch Erkennen einer Bewegung und eines Biosignals, welche in oder um einen Teil eines Körpers des Nutzers, an welchem die tragbare Vorrichtung (600) befestigt ist, auftreten;
Erkennen (120) einer externen Vorrichtung durch die tragbare Vorrichtung (600);
Aufbauen (130) einer drahtlosen Kommunikationsverbindung für die tragbare Vorrichtung (600) mit der erkannten externen Vorrichtung und einer internen Vorrichtung, basierend auf der erkannten Geste;
Erhalten von Information von der externen Vorrichtung und der internen Vorrichtung, welche verwendet wird für eine direkte drahtlose Kommunikationsverbindung zwischen der externen Vorrichtung und der internen Vorrichtung ohne die tragbare Vorrichtung (600), basierend auf der erkannten Geste; und
Aufbauen der direkten drahtlosen Kommunikationsverbindung zwischen der externen Vorrichtung und der internen Vorrichtung basierend auf der erhaltenen Information;
wobei die interne Vorrichtung sich auf eine Vorrichtung bezieht, die beliebig durch den Nutzer der tragbaren Vorrichtung (600) kontrollierbar ist;
wobei die externe Vorrichtung sich auf eine Vorrichtung bezieht, die nicht beliebig durch den Nutzer der tragbaren Vorrichtung (600) kontrollierbar ist.

2. Kommunikationsverfahren gemäß Anspruch 1, wobei das Aufbauen der direkten drahtlosen Kommunikationsverbindung zwischen der externen Vorrichtung und der internen Vorrichtung, basierend auf der erhaltenen Information, umfasst Einstellen, durch die tragbare Vorrichtung (600), von Daten, empfangen von der externen Vorrichtung, welche in der internen Vorrichtung zu speichern sind.

3. Kommunikationsverfahren gemäß Anspruch 1, wobei das Aufbauen der direkten drahtlosen Kommunikationsverbindung zwischen der externen Vorrichtung und der internen Vorrichtung, basierend auf der erhaltenen Information, umfasst Laden von Daten, durch die tragbare Vorrichtung (600), von der internen Vorrichtung; und Durchführen der drahtlosen Kommunikation mit der externen Vorrichtung, basierend auf den geladenen Daten, wobei die geladenen Daten Information umfassen, die verbunden ist mit wenigstens einem aus einem Nutzer der tragbaren Vorrichtung (600), Aufbauen der drahtlosen Kommunikationsverbindung, der tragbaren Vorrichtung (600), und der internen Vorrichtung.

4. Tragbare Vorrichtung (600), umfassend:
einen Gestenerkenner (610), der konfiguriert ist, eine Geste eines Nutzers zu erkennen durch Erkennen einer Bewegung und eines Biosignals, welche in oder um einen Teil eines Körpers des Nutzers, an welchem die tragbare Vorrichtung (600) befestigt ist, auftritt;
einen Externe-Vorrichtung-Erkenner (620), der konfiguriert ist, die externe Vorrichtung zu erkennen, um die drahtlosen Kommunikation mit der tragbaren Vorrichtung (600) durchzuführen;
einen Drahtlose-Kommunikationsverbindung-Aufbauer (630), der konfiguriert ist, eine drahtlose Kommunikationsverbindung für die tragbare Vorrichtung (600) mit einer externen Vorrichtung und einer internen Vorrichtung aufzubauen, basierend auf der erkannten Geste;
einen Drahtlose-Kommunikations-Durchführer (640), der konfiguriert ist, drahtlose Kommunikation durch die tragbare Vorrichtung (600) mit der externen Vorrichtung und der internen Vorrichtung durchzuführen, basierend auf der erkannten Geste;
wobei die interne Vorrichtung sich auf eine Vorrichtung bezieht, die beliebig durch den Nutzer der tragbaren Vorrichtung (600) kontrollierbar ist;
wobei die externe Vorrichtung sich auf eine Vorrichtung bezieht, die nicht beliebig durch den Nutzer der tragbaren Vorrichtung (600) kontrollierbar ist;
wobei der Drahtlose-Kommunikation-Durchführer ferner konfiguriert ist, Information zu erhalten, die für eine direkte drahtlose Kommunikationsverbindung zwischen der externen Vorrichtung und der internen Vorrichtung ohne die tragbare Vorrichtung (600) verwendet wird, basierend auf der erkannten Geste; und die direkte drahtlose Kommunikationsverbindung zwischen der externen Vorrichtung und der internen Vorrichtung aufzubauen, basierend auf der erhaltenen Information.

5. Nichtflüchtiges, computerlesbares Speichermedium, das ein Programm für ein Kommunikationsverfahren unter Verwendung einer tragbaren Vorrichtung (600) speichert, das Programm umfassend Instruieren, um einen Computer zu veranlassen, das Verfahren durchzuführen gemäß:
Erkennen einer Geste eines Nutzers durch Erkennen einer Bewegung und eines Biosignals, welche in oder um einen Teil eines Körpers des Nutzers, an welchem die tragbare Vorrichtung (600) befestigt ist, auftreten;
Suchen nach einer externen Vorrichtung, um eine gefundene externe Vorrichtung zu identifizieren; und
Aufbauen einer drahtlosen Kommunikationsverbindung für die tragbare Vorrichtung (600) mit der erkannten externen Vorrichtung und einer internen Vorrichtung, basierend auf der erkannten Geste;
Erhalten von Information von der externen Vorrichtung und der internen Vorrichtung, welche verwendet wird für eine direkte drahtlose Kommunikationsverbindung zwischen der externen Vorrichtung und der internen Vorrichtung ohne die tragbare Vorrichtung (600), basierend auf der erkannten Geste;
und Aufbauen der direkten drahtlosen Kommunikationsverbindung zwischen der externen Vorrichtung und der internen Vorrichtung basierend auf der erhaltenen Information;
wobei die interne Vorrichtung sich auf eine Vorrichtung bezieht, die beliebig durch den Nutzer der tragbaren Vorrichtung (600) kontrollierbar ist;
wobei die externe Vorrichtung sich auf eine Vorrichtung bezieht, die nicht beliebig durch den Nutzer der tragbaren Vorrichtung (600) kontrollierbar ist.

## Revendications

1. Procédé de communication à l'aide d'un dispositif portable (600), comprenant :
la reconnaissance (110) du geste d'un utilisateur en détectant un mouvement et un signal biologique qui se produisent dans une partie du corps de l'utilisateur à laquelle est fixé le dispositif portable (600) ou autour de celle-ci,
la reconnaissance (120) par le dispositif portable (600) d'un dispositif externe,
l'établissement (130) d'une connexion de communication sans fil pour le dispositif portable (600) avec le dispositif externe reconnu et avec un dispositif interne sur la base du geste reconnu,
la récupération d'informations auprès du dispositif externe et du dispositif interne, utilisées pour une connexion de communication sans fil directe entre le dispositif externe et le dispositif interne sans le dispositif portable (600) sur la base du geste reconnu, et
l'établissement de la connexion de communication sans fil directe entre le dispositif externe et le dispositif interne sur la base des informations obtenues,
dans lequel le dispositif interne fait référence à un dispositif qui peut être commandé de manière arbitraire par l'utilisateur du dispositif portable (600),
dans lequel le dispositif externe fait référence à un dispositif qui ne peut pas être commandé de manière arbitraire par l'utilisateur du dispositif portable (600).

2. Procédé de communication selon la revendication 1, dans lequel l'établissement de la connexion de communication sans fil directe entre le dispositif externe et le dispositif interne sur la base des informations obtenues comprend l'établissement, par le dispositif portable (600), des données reçues en provenance du dispositif externe et à stocker dans le dispositif interne.

3. Procédé de communication selon la revendication 1, dans lequel l'établissement de la connexion de communication sans fil directe entre le dispositif externe et le dispositif interne sur la base des informations obtenues comprend le chargement de données provenant du dispositif interne par le dispositif portable (600) ainsi que l'exécution de la communication sans fil avec le dispositif externe sur la base des données chargées, les données chargées comprenant des informations associées à au moins l'un parmi : l'utilisateur du dispositif portable (600), l'établissement de la connexion de communication sans fil, le dispositif portable (600) et le dispositif interne.

4. Dispositif portable (600) comprenant :
un dispositif de reconnaissance de geste (610) configuré pour reconnaître le geste d'un utilisateur en détectant un mouvement et un signal biologique qui se produisent dans une partie du corps de l'utilisateur à laquelle est fixé le dispositif portable (600) ou autour de celle-ci,
un dispositif de reconnaissance de dispositif externe (620) configuré pour reconnaître le dispositif externe afin de réaliser la communication sans fil avec le dispositif portable (600),
un dispositif d'établissement de connexion de communication sans fil (630) configuré pour établir une connexion de communication sans fil pour le dispositif portable (600) avec un dispositif externe et avec un dispositif interne sur la base du geste reconnu,
un dispositif d'exécution de communication sans fil (640) configuré pour que le dispositif portable (600) effectue une communication sans fil avec le dispositif externe et le dispositif interne sur la base du geste reconnu,
dans lequel le dispositif interne fait référence à un dispositif qui peut être commandé de manière arbitraire par l'utilisateur du dispositif portable (600),
dans lequel le dispositif externe fait référence à un dispositif qui ne peut pas être commandé de manière arbitraire par l'utilisateur du dispositif portable (600),
dans lequel le dispositif d'exécution de communication sans fil est en outre configuré pour récupérer
des informations utilisées pour une connexion de communication sans fil directe entre le dispositif externe et le dispositif interne sans le dispositif portable (600) sur la base du geste reconnu, ainsi que pour établir la connexion de communication sans fil directe entre le dispositif externe et le dispositif interne sur la base des informations obtenues.

5. Support non transitoire de stockage pouvant être lu par ordinateur stockant un programme destiné à un procédé de communication utilisant un dispositif portable (600), le programme comprenant des ordres permettant d'amener un ordinateur à réaliser le procédé consistant à :
reconnaître le geste d'un utilisateur en détectant un mouvement et un signal biologique qui se produisent dans une partie du corps de l'utilisateur à laquelle est fixé le dispositif portable (600) ou autour de celle-ci,
rechercher un dispositif externe afin d'identifier un dispositif externe trouvé, et
établir une connexion de communication sans fil pour le dispositif portable (600) avec le dispositif externe reconnu et avec un dispositif interne sur la base du geste reconnu,
récupérer des informations auprès du dispositif externe et du dispositif interne, utilisées pour une connexion de communication sans fil directe entre le dispositif externe et le dispositif interne sans le dispositif portable (600) sur la base du geste reconnu, et
établir la connexion de communication sans fil directe entre le dispositif externe et le dispositif interne sur la base des informations obtenues,
dans lequel le dispositif interne fait référence à un dispositif qui peut être commandé de manière arbitraire par l'utilisateur du dispositif portable (600),
dans lequel le dispositif externe fait référence à un dispositif qui ne peut pas être commandé de manière arbitraire par l'utilisateur du dispositif portable (600).
